# EUROPEAN PATENT APPLICATION

(11) **EP 4 661 357 A1**
(43) Date of publication of application: **10.12.2025**
(21) Application number: 25180423.3
(22) Date of filing: 03.06.2025
(51) Int. Cl.: H04L 41/0894, H04L 67/143, H04M 15/00

(54) **BINDING DATA CLEANUP IN RESPONSE TO SESSION STAGNATION IN WIRELESS COMMUNICATION NETWORKS**

(30) Priority: 05.06.2024 US 202418734321
(71) Applicant: T-Mobile Innovations LLC, Overland Park, KS 66251-2100 (US)
(72) Inventor: VOODEM, Suryaprakash Reddy, Overland Park, 66251 (US)
(74) Representative: Suddaby, Mark Edward

(57) **Abstract**

Various embodiments include a wireless communication network that comprises network circuitry. The network circuitry executes a policy controller, session controller, and binding data store. The policy controller detects a stale session condition for a wireless user device and transfers a policy update request to the session controller for a session associated with the user device. The policy controller receives a message from the session controller that indicates the session associated with the user device does not exist. The policy controller deletes session data for the user device in response to the message and directs the binding data store to delete session binding data associated with the user device. The binding data store receives the direction from the policy controller, deletes the session binding data, and transfers an indication that the session binding data is deleted to the policy controller. The policy controller receives the indication from the binding data store.

## Description

### TECHNICAL FIELD

Various embodiments of the present technology relate to data management, and more specifically, to removing session binding data in response to stale session detection.

### BACKGROUND

Wireless communication networks provide wireless data services to wireless user devices. Exemplary wireless data services include voice calling, video calling, internet-access, media-streaming, online gaming, social-networking, and machine-control. Exemplary wireless user devices comprise phones, computers, vehicles, robots, and sensors. Radio Access Networks (RANs) exchange wireless signals with the wireless user devices over radio frequency bands. The wireless signals use wireless network protocols like Fifth Generation New Radio (5GNR), Long Term Evolution (LTE), Institute of Electrical and Electronic Engineers (IEEE) 802.11 (WIFI), and Low-Power Wide Area Network (LP-WAN). The RANs exchange network signaling and user data with network elements that are often clustered together into wireless network cores over backhaul data links. The core networks execute network functions to provide wireless data services to the wireless user devices. Exemplary network functions include Access and Mobility Management Function (AMF), Session Management Function (SMF), User Plane Function (UPF), Policy Control Function (PCF), and Binding Support Function (BSF).

A wireless user device registers over a RAN with an AMF in the core network to receive wireless services. Registration entails authentication of the device and authorization of the device for service on the network. Once registered, the device transfers a session request to the AMF over the RAN to begin a data session. The AMF directs the SMF in the network core to establish the session for the device. The SMF interacts with the PCF to retrieve network policies that govern the device's level of service during the session. Exemplary network policies include Quality-of-Service (QoS) values, data routing rules, and the like. The SMF controls the UPF to serve the user device the data session over the RAN based on the retrieved policies. The PCF stores session data that characterizes the network policies for the device. The PCF stores session binding data that associates the PCF with the user device on the BSF. The BSF maintains a catalog of bindings between the PCFs in the network and the user devices receiving service on the network. The BSF may expose the session bindings to network functions, network operators, and/or third parties for a variety of services (e.g., network topology serving).

When the user device ends its session, the device notifies the AMF of the session termination. The SMF controls the UPF to end the session and notifies the PCF of the session termination. The PCF deletes the session data associated with the user device and drives the BSF to delete the binding between the device and the PCF. Wireless communication networks and large and complex. This complexity results in errors on the SMF and/or PCF that inhibit the SMF from notifying the PCF of session terminations. Session stagnation refers to when the PCF stores session data for terminated sessions. When the SMF fails to notify the PCF of a session termination, stale session cleanup is triggered on the PCF after a period of time, typically 24 hours. The PCF removes session data for the stale sessions (e.g., session data characterizing policies for terminated sessions). However, this information is not propagated to the BSF. As such, the BSF ends up storing large quantities of stale session bindings. This reduces the accuracy of the data stored by the BSF which limits its usefulness to other network functions, network operators, and/or third parties. The large quantity of stale session data stresses the computing systems of the BSF reducing its performance.

Unfortunately, in some instances, wireless communication networks may not effectively or efficiently remove binding data for a wireless user device in response to session stagnation.

### OVERVIEW

This Overview is provided to introduce a selection of concepts in a simplified form that are further described below in the Technical Description. This summary is not intended to identify key features or essential features of the claimed subject matter, nor is it intended to be used as an aid in determining the scope of the claimed subject matter.

Various embodiments of the present technology relate to solutions for network data management. Some embodiments comprise a method. The method comprises detecting, by a policy controller of a wireless communication network, a stale session condition for a wireless user device. The method further comprises transferring, by the policy controller, a policy update request to a session controller for a session associated with the wireless user device. The method further comprises receiving, by the policy controller, a message from the session controller that indicates the session associated with the wireless user device does not exist. The method further comprises deleting, by the policy controller, session data for the wireless user device in response to the message. The method further comprises directing, by the policy controller, a binding data store to delete session binding data associated with the wireless user device wherein the binding data store receives the direction from the policy controller and deletes the session binding data. The method further comprises receiving, by the policy controller, a delete indication from the binding data store that the session binding data is deleted.

Some embodiments comprise a wireless communication network. The wireless communication network comprises network circuitry, a policy controller, a session controller, and a binding data store. The network circuitry executes the policy controller, session controller, and binding data store. The policy controller detects a stale session condition for a wireless user device. The policy controller transfers a policy update request to the session controller for a session associated with the wireless user device. The policy controller receives a message from the session controller that indicates the session associated with the wireless user device does not exist. The policy controller deletes session data for the wireless user device in response to the message. The policy controller directs the binding data store to delete session binding data associated with the wireless user device. The binding data store receives the direction to delete the session binding data from the policy controller. The binding data store deletes the session binding data. The binding data store transfers the delete indication to the policy controller. The policy controller receives a delete indication from the binding data store that the session binding data is deleted.

Some embodiments comprise one of more non-transitory computer readable storage media having program instructions stored thereon. When executed by a computing system, the program instructions direct the computing system to perform operations. The operations comprise detecting a stale session condition for a wireless user device of a wireless communication network. The operations further comprise transferring a policy update request to a session controller for a session associated with the wireless user device. The operations further comprise receiving a message from the session controller that indicates the session associated with the wireless user device does not exist. The operations further comprise deleting session data for the wireless user device in response to the message. The operations further comprise directing a binding data store to delete session binding data associated with the wireless user device wherein the binding data store receives the direction to delete the session binding data and deletes the session binding data. The operations further comprise receiving a delete indication from the binding data store that the session binding data is deleted.

### DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates a communication network.
Figure 2 illustrates an exemplary operation of the communication network.
Figure 3 illustrates another exemplary operation of the communication network.
Figure 4 illustrates a Fifth Generation (5G) communication network.
Figure 5 illustrates network functions in the 5G communication network.
Figure 6 illustrates a Network Function Virtualization Infrastructure (NFVI) in the 5G communication network.
Figure 7 further illustrates the NFVI in the 5G communication network.
Figure 8 illustrates an exemplary operation of the 5G communication network.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### TECHNICAL DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

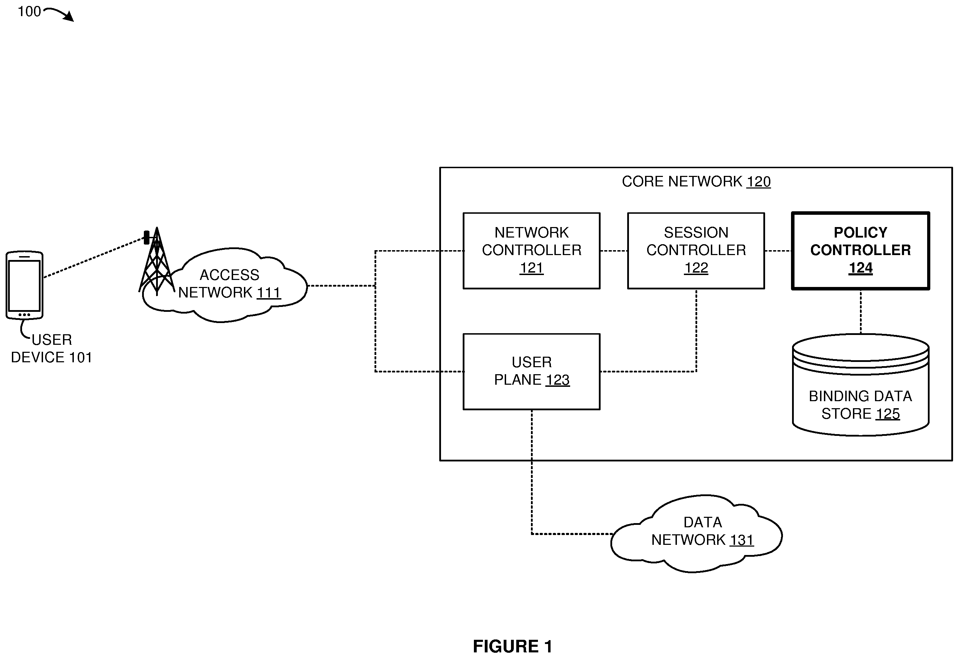

Figure 1 illustrates communication network 100 to remove binding data for a wireless user device in response to session stagnation. Communication network 100 provides services like media-streaming, internet-access, voice/video calling, text messaging, machine communications, or some other wireless communications product. Communication network 100 comprises user device 101, access network 111, core network 120, and data network 131. Core network 120 comprises network controller 121, session controller 122, user plane 123, policy controller 124, and binding data store 125. In other examples, communication network 100 may comprise additional or different elements than those illustrated in Figure 1.

Various examples of network operation and configuration are described herein. In some examples, user device 101 attaches to access network 111. Device 101 transfers a request for wireless network service to network controller 121 over access network 111. Network controller 121 approves the service request and interacts with session controller 122 to set up the requested session for device 101. Exemplary session types include data sessions, voice/video conferencing sessions, Internet Protocol (IP) messaging sessions (e.g., Rich Communication Service (RCS) messaging), and the like. Session controller 122 requests network policies for device 101 from policy controller 124. The network policies govern device 101's behavior on network 100. Exemplary policies include data routing policies, network resource allocation policies, and Quality-of-Service (QoS). Policy controller 124 returns the requested policies to session controller 122. Policy controller 124 maintains session data for device 101 that characterizes the selected policies for device 101's session. Policy controller 124 directs binding data store 125 to create a session binding between policy controller 124 and user device 101. Binding data store 125 stores session binding data that associates user device 101 and policy controller 124. Session controller 122 controls user plane 123 to setup the session for user device 101 based on the policies retrieved from policy controller 124. Session controller 122 notifies network controller 121 which in turn directs device 101 to begin the session. Device 101 exchanges user data with user plane 123 over access network 111. User plane 123 exchanges user data with data network 131.

Subsequently, device 101 terminates its session on network 100. For example, user device 101 may receive a user input ending the session (e.g., application termination, call termination, device shut off etc.). Alternatively, network controller 121 may perform a network-initiated session termination (e.g., network-initiated deregistration). Network controller 121 detects the session termination (e.g., by receiving a notification from device 101) and directs session controller 122 to end the session for device 101. Session controller 122 controls user plane 123 to tear down the session (e.g., bearer termination) and notifies network controller 121 upon successful termination. In typical operation, session controller 122 will notify policy controller 124 of the session termination. Policy controller 124 then deletes the session data for device 101 and directs binding data store 125 to delete the session binding data for device 101. However, errors can occur in session controller 122 and policy controller 124 that prevent policy controller 124 from receiving the session termination notification. Exemplary errors include computing errors (e.g., caused by excessive signaling load, microprocessor load, memory percent occupancy, etc.) that inhibit session controller 122 from notifying policy controller 124 or inhibit policy controller 124 from processing the session termination notification.

After the session of user device 101 is terminated and policy controller 124 fails to receive/process the session termination notification from session controller 122, policy controller 124 detects a stale session condition for user device 101. For example, policy controller 124 may set a stale session timer and may detect a stale session condition in response to timer expiration before reception of a policy update message from session controller 122. Policy controller 124 transfers an update notification to session controller 122 to determine if the session for device 101 is still active. Since the session was terminated, session controller 122 notifies policy controller 124 that the session no longer exists. In response, policy controller 124 deletes the session data for device 101 and directs binding data store 125 to delete the session binding data between device 101 and policy controller 124. Binding data store 125 deletes the session binding data and notifies policy controller 124 that the data is deleted. Policy controller 124 receives the delete notification from binding data store 125.

Advantageously, communication network 100 effectively and efficiently removes binding data for wireless user devices in response to session stagnation. Moreover, by reducing the amount of stale binding data in binding data store 125, the computational load on binding data store 125 is reduced thereby improving computational efficiency of store 125. Furthermore, the aggregate accuracy of the session binding data in store 125 is increased.

User device 101 comprises a vehicle, drone, robot, computer, phone, sensor, or another type of data appliance with wireless and/or wireline communication circuitry. User device 101 and access network 111 communicate over links using wireless/wireline technologies like Sixth Generation Radio (6GR), Fifth Generation New Radio (5GNR), Long Term Evolution (LTE), Institute of Electrical and Electronic Engineers (IEEE) 802.11 (WIFI), Low-Power Wide Area Network (LP-WAN), Bluetooth, IEEE 802.3 (Ethernet), and/or some other type of wireless or wireline networking protocol. The wireless technologies use electromagnetic frequencies in the low-band, mid-band, high-band, or some other portion of the electromagnetic spectrum. The wired connections comprise metallic links, glass fibers, and/or some other type of wired interface.

Although access network 111 is illustrated as a tower, network 111 may comprise another type of mounting structure (e.g., a building), or no mounting structure at all. Access network 111 comprises a Sixth Generation (6G) Radio Access Network (RAN), Fifth Generation (5G) RAN, LTE RAN, gNodeB, eNodeB, NB-IoT access node, trusted non-3GPP access node, untrusted non-3GPP access node, LP-WAN base station, wireless relay, WIFI hotspot, Bluetooth access node, and/or another wireless or wireline network transceiver. Access network 111 is connected to network core 120 over backhaul data links. Access network 111 exchanges network signaling and user data with network controller 121 and user plane 123 clustered together into core network 120. Access network 111 and core network 120 may communicate via edge networks like internet backbone providers, edge computing systems, or another type of edge system to provide the backhaul data and signaling links between access network 111 and core network 120.

Access network 111 may comprise Radio Units (RUs), Distributed Units (DUs) and Centralized Units (CUs). The RUs may be mounted at elevation and have antennas, modulators, signal processors, and the like. The RUs are connected to the DUs which are usually nearby network computers. The DUs handle lower wireless network layers like the Physical Layer (PHY), Media Access Control (MAC), and Radio Link Control (RLC). The DUs are connected to the CUs which are larger computer centers that are closer to the network cores. The CUs handle higher wireless network layers like the Radio Resource Control (RRC), Service Data Adaption Protocol (SDAP), and Packet Data Convergence Protocol (PDCP). The CUs are coupled to the network functions in core network 120. Access network 111 may also comprise RUs and Baseband Units (BBUs). The BBUs comprise network computers. The BBUs handle lower and higher network layers like RRC, PDCP, RLC, MAC, and PHY. The BBUs are coupled to network entities in core 120.

Core network 120 is representative of computing systems that provide wireless data services to user device 101 over access network 111. Exemplary computing systems comprise Network Function Virtualization Infrastructure (NFVI) systems, container-based virtualized computing systems, data centers, server farms, cloud computing networks, hybrid cloud networks, and the like. Core network 120 may comprise a Third Generation Partnership Project (3GPP) core network architecture like Sixth Generation Core (6GC), Fifth Generation Core (5GC), Evolved Packet Core (EPC), and/or another type of 3GPP core network architecture. Access network 111, core network 120, and data network 131 communicate over various links that use metallic links, glass fibers, radio channels, or some other communication media. The links use 6GC, 5GC, EPC, Ethernet, Time Division Multiplex (TDM), Data Over Cable System Interface Specification (DOCSIS), Internet Protocol (IP), General Packet Radio Service Transfer Protocol (GTP), 6GR, 5GNR, LTE, WIFI, virtual switching, inter-processor communication, bus interfaces, and/or some other data communication protocols. The computing systems of core network 120 store and execute the network functions/entities to form network controller 121, session controller 122, user plane 123, policy controller 124, and binding data store 125.

Network controller 121 comprises network functions/entities like Access and Mobility Management Function (AMF) and Mobility Management Entity (MME). Session controller 122 comprises network functions/entities like Session Management Function (SMF). User plane 123 comprises network functions/entities like User Plane Function (UPF), Serving Gateway (S-GW), and Packet Gateway (P-GW). Policy controller 124 comprises network functions/entities like Policy Control Function (PCF), Charging Function (CHF), and Policy and Charging Rules Function (PCRF). Binding data store 125 comprises network functions/entities like Binding Support Function (BSF). Other data management functions/entities like Unified Data Management (UDM), Unified Data Registry (UDR), Home Subcriber Server (HSS), and Home Subscriber Registry (HLR) may be present in core 120. Data network 131 comprises an Application Server (AS) that hosts applications (e.g., media streaming applications, social network applications, online gaming applications, IP messaging applications, voice/video calling applications, etc.) for device 101.

User device 101 and access network 111 comprise antennas, amplifiers, filters, modulation, analog/digital interfaces, microprocessors, software, memories, transceivers, bus circuitry, and the like. User device 101, access network 111, core network 120, and data network 131 comprise microprocessors, software, memories, transceivers, bus circuitry, and the like. The microprocessors comprise Digital Signal Processors (DSP), Central Processing Units (CPU), Graphical Processing Units (GPU), Application-Specific Integrated Circuits (ASIC), Field Programmable Gate Array (FPGA), and/or the like. The memories comprise Random Access Memory (RAM), flash circuitry, Solid State Drives (SSDs), Hard Disk Drives (HDDs), Non-Volatile Memory Express (NVMe) SSDs, and/or the like. The memories store software like operating systems, user applications, radio applications, network functions, and network entities. The microprocessors retrieve the software from the memories and execute the software to drive the operation of wireless communication network 100 as described herein.

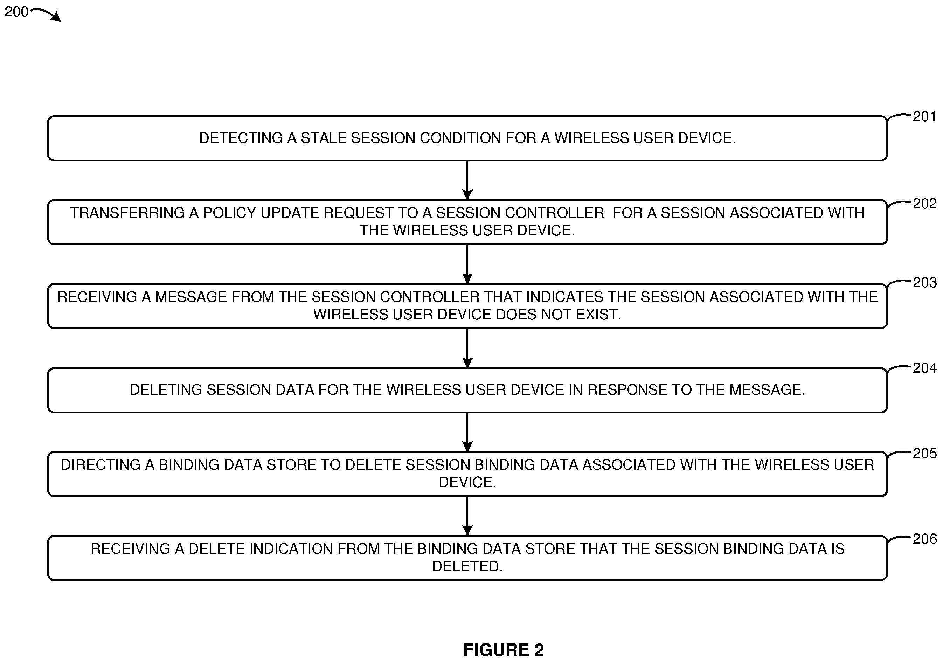

Figure 2 illustrates process 200. Process 200 comprises an exemplary operation of communication network 100 to remove binding data for a wireless user device in response to session stagnation. The operation may vary in other examples. The operations of process 200 comprise detecting a stale session condition for a wireless user device (step 201). The operations further comprise transferring a policy update request to a session controller for a session associated with the wireless user device (step 202). The operations further comprise receiving a message from the session controller that indicates the session associated with the wireless user device does not exist (step 203). The operations further comprise deleting session data for the wireless user device in response to the message (step 204). The operations further comprise directing a binding data store to delete session binding data associated with the wireless user device (step 205). The operations further comprise receiving a delete indication from the binding data store that the session binding data is deleted (step 206).

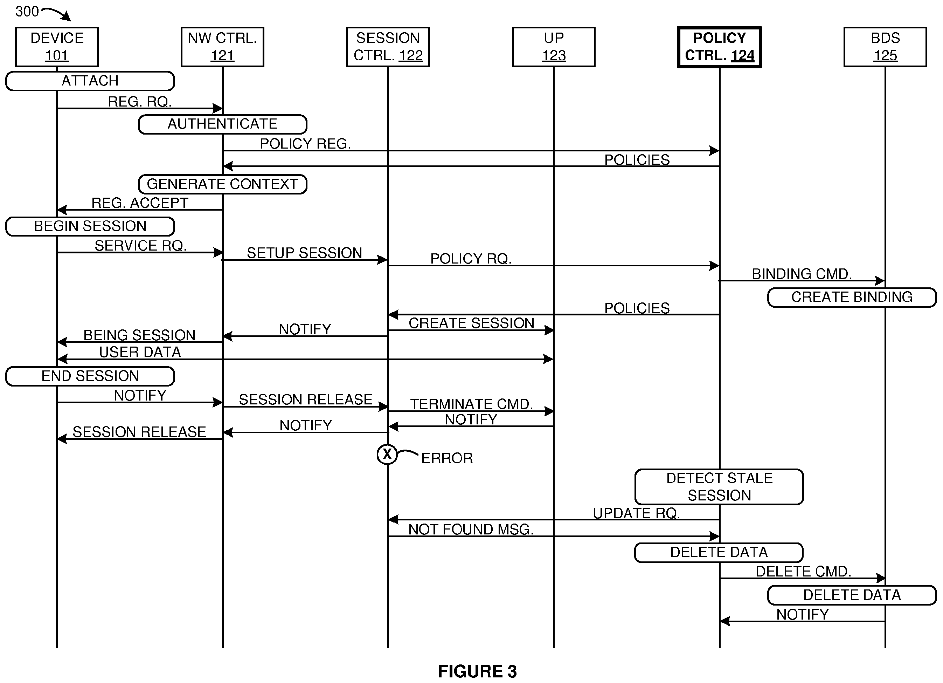

Figure 3 illustrates process 300. Process 300 comprises an exemplary operation of wireless communication network 100 to remove binding data for a wireless user device in response to session stagnation. Process 300 comprises an example of process 200 illustrated in Figure 2, however process 200 may differ. The operation may vary in other examples. In some examples, device 101 attaches to access network 101. Device 101 and access network 111 implement a Random Access Channel (RACH) process to establish a signaling link for device 101. Once the signaling link is established, device 101 transfers a registration request (REG. RQ.) to network controller 121 over access network 111. The registration request includes information like a registration type, 5G-Globally Unique Temporary Identifier (5G-GUTI), Tracking Area ID (TAI), Network Slice Selection Assistance Information (NSSAI) requests, UE capabilities, Protocol Data Unit (PDU) session requests, and the like.

Network controller (NW CTRL.) 121 authenticates the identity of device 101 and authorizes device 101 for service on network 100 based on the registration request. For example, network controller 121 may access a subscriber profile for device 101 managed by a UDM/HSS to authenticate and authorize device 101 for service on network 100. In response to authentication and authorization, network controller 121 registers device 101 with network core 120. Network controller 121 generates context for device 101 that comprises the retrieved network policies (e.g., data routing policies), subscriber data (e.g., subscribed bitrate), network addresses (e.g., device IP address), and/or other information for device 101 to receive service on network 100. Network controller 121 transfers a registration (REG.) accept message to device 101. The registration accept message comprises the context.

Once registered, device 101 begins a session on network 100 based on the context. Device 101 transfers a service request to network controller 121 over access network 111. Network controller 121 selects session controller (CTRL.) 122 to serve device 101. Network controller 121 directs session controller 122 to establish the requested session for device 101. For example, device 101 may request media streaming Protocol Data Unit (PDU) session and network controller 121 may direct session controller 122 to create the media streaming PDU session for device 101. Session controller 121 transfers a policy request to policy controller 124. The request identifies device 101 with a user Identifier (ID) like Subscriber Permanent Identifier (SUPI), a Generic Public Subscription Identifier (GPSI), Internet Protocol (IP) address, and the like. Policy controller 124 directs binding data store (BDS) 125 to create a session binding between policy controller 124 and device 101. Binding data store 125 stores the network address of policy controller 124 in association with the user ID of device 101. Binding data store 125 notifies policy controller 124 that the binding session data is created. Policy controller 124 selects network policies for device 101 based on the user ID. Policy controller 124 creates and stores session data that indicates the selected policies. Policy controller 124 transfers the policies to session controller 122. Policy controller 124 sets a stale session timer to detect session stagnation for device 101.

Session controller 122 receives the network policies from policy controller 124. Session controller 122 directs user plane (UP) 123 to set up the data links to support the session. When the network data links to support the session are organized, session controller 122 notifies network controller 121. Network controller 121 directs device 101 to begin the session. Device 101 exchanges user data for the session with user plane 123 over access network 111. User plane 123 exchanges the user data with data network 131. Session controller 122 controls user plane 123 to enforce the policies retrieved from policy controller 124.

Subsequently, user device 101 ends the session in response to user input and notifies network controller 121 over access network 111. For example, device 101 may receive an input closing a media streaming application and device 101 may transfer a session release request to network controller 121 to end its media streaming PDU session. Network controller 121 receives the notification and directs session controller 122 to release the session for device 101. Session controller 122 directs user plane 121 to terminate the data links that support the session for device 101. User plane 123 tears down the data links and notifies session controller 122 of the successful termination. Session controller 122 in turn notifies network controller 121 which confirms the session release to device 101 over access network 101.

During session release, an error occurs in session controller 122 (e.g., CPU overload) which causes session controller 122 to fail to notify policy controller 124 of the session termination. At this point, policy controller 124 stores stale session data (e.g., session data for a non-active/terminated session) and binding data store 125 stores stale session binding data (e.g., a binding between a policy controller and a device no longer on the network). The stale session timer expires on policy controller 124 and policy controller 124 responsively detects a stale session condition for device 101. To confirm session stagnation, policy controller 124 transfers a session update request to session controller 122. The update request identifies device 101 by user ID and requests information (e.g., status) for the session. Since the session for device 101 is terminated, the requested data is not available in session controller 122. In response, session controller transfers a not found message (MSG.) to policy controller 124. The session not found message confirms to policy controller 124 that the session data for device 101 is stale. Policy controller 124 deletes the session data for device 101 and commands binding data store 125 to delete the session binding between device 101 and policy controller 124. Binding data store 125 deletes the corresponding session binding data to remove the stale session binding. Binding data store 125 transfers a delete notification confirming the removal of the session binding. Policy controller 124 receives the notification from binding data store 125.

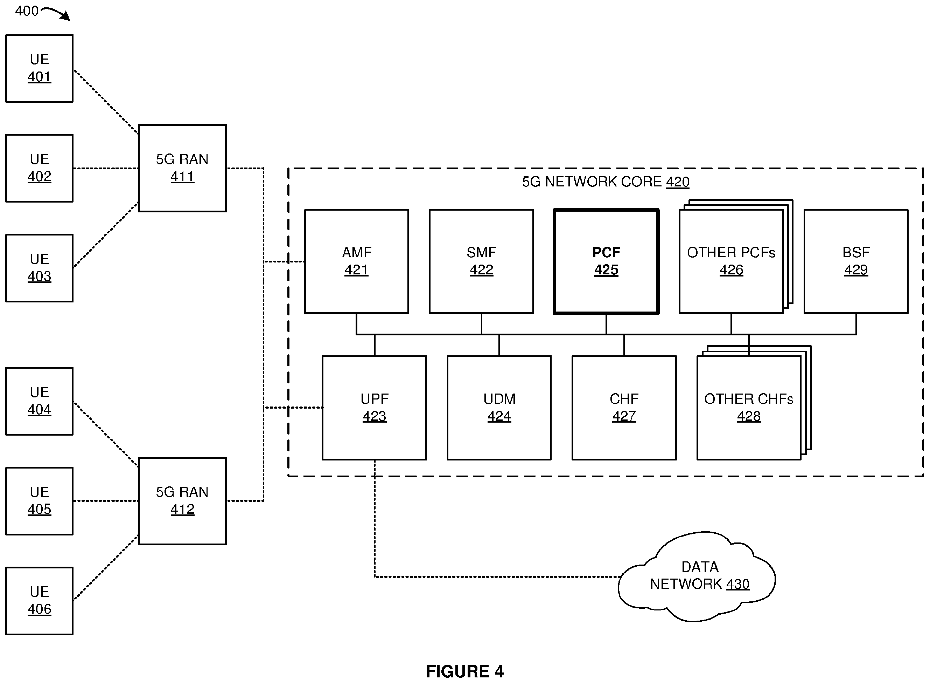

Figure 4 illustrates 5G communication network 400 to perform binding data cleanup in response to session stagnation for a wireless User Equipment (UE). 5G communication network 400 comprises an example of communication network 100 illustrated in Figure 1, however network 100 may differ. 5G communication network 400 comprises UEs 401-406, 5G RANs 411 and 412, 5G network core 420, and data network 430. 5G network core 420 comprises AMF 421, SMF 422, UPF 423, UDM 424, PCF 425, other PCFs 426, CHF 427, other CHFs 428, and BSF 429. Other network functions and network entities like Authenticating Server Function (AUSF), Network Slice Selection Function (NSSF), Unified Data Registry (UDR), Network Repository Function (NRF), Short Message Service Function (SMSF), Network Exposure Function (NEF), Application Function (AF), Equipment Identity Register (EIR), and Session Communication Proxy (SCP) are typically present in 5G network core 420 but are omitted for clarity. In other examples, 5G communication network 400 may comprise different or additional elements than those illustrated in Figure 4.

In some examples, UE 401 wirelessly attaches to 5G RAN 411 over a 5GNR link. UE 401 undergoes a RACH procedure with 5G RAN 411 to establish a secure signaling channel. UE 401 transfers a registration request to AMF 421 over 5G RAN 411. The registration request indicates a registration type, 5G-GUTI, TAI, NSSAI requests, UE capabilities, and the like. The initial registration request may additionally include PDU session requests. In response to the registration request, AMF 421 transfers a Non-Access Stratum (NAS) identity request to UE 401 over a NAS signaling link between UE 401 and AMF 421 that traverses RAN 411. UE 401 indicates its Subscriber Concealed Identifier (SUCI) to AMF 421 over the NAS link that traverses 5G RAN 411. AMF 421 indicates the SUCI of UE 401 to UDM 424, typically over an AUSF, to retrieve authentication vectors to authenticate UE 401. UDM 424 returns the SUPI for UE 401 and authentication vectors like an expected result, random number, key selection criteria, and the like. AMF 421 transfers an authentication challenge that comprises the random number and key selection criteria to UE 401 over the NAS link that traverses RAN 411. UE 401 hashes random number with its secret key to generate an authentication result and indicates the authentication result to AMF 421 over the NAS link. AMF 421 matches the expected result retrieved from UDM 424 with the authentication result received from UE 401 to authenticate UE 401.

Responsive to the authentication, AMF 421 transfers a context registration request to UDM 424 that includes AMF ID, a supported feature list, a Permanent Equipment Identifier (PEI) for UE 401, and the like. UDM 424 indicates successful UDM registration to AMF 421. In response, AMF 421 requests access and mobility subscription data, SMF selection subscription data, and UE context in SMF data from UDM 424. UDM 424 accesses the subscriber profile for UE 401 stored by a UDR (not illustrated) and returns the requested data. The access and mobility subscription data comprises a supported feature list for UE 401 (e.g., Quality of Service Class Indicator (QCI), Aggregate Maximum Bit Rate (AMBR), latency, voice/video calling, internet access, etc.), a General Public Subscription Identifier (GPSI) array, slice selection information, and the like. The SMF selection data comprises a supported feature list, and a list of S-NSSAIs and associated information. The UE context in SMF data comprises PDU session and EPC interworking information.

AMF 421 transfers a policy creation request to PCF 425 to create a policy association for UE 401. PCF 425 responds to the request with policy association information like the SUPI, GPSI, PEI, and user location information for UE 401. PCF 425 subscribes to AMF 421 for event reporting like user location updates, registration state changes, communication failure events, and the like. AMF 421 creates a PCF subscription based on the policy association information and signals to PCF 425 of the successful subscription creation. AMF 421 may also interact with an NSSF to select one or more network slices for UE 401 based on the slice selection information.

Responsive to policy association creation, AMF 421 registers UE 401 for service on network 400. AMF 421 generates UE context for UE 401 that comprises the subscriber data retrieved from UDM 424, network policies retrieved from PCF 425, and/or other data defining the level of service for UE 401. The UE context defines the authorized services and network policies for UE 401. AMF 421 generates a registration accept message that includes the UE context. AMF 421 transfers the registration accept message to UE 401 over RAN 411.

UE 401 receives a user input and responsively launches a user application. UE 401 wirelessly transfers a PDU session request to AMF 421 over RAN 411 to create a PDU session for the application. AMF 421 selects SMF 422 to serve UE 401 based on SMF selection data received from UDM 424 and network policies received from PCF 425. AMF 421 transfers a PDU session update request to SMF 422 that includes a PDU session list and PDU session activation command. In response to the request, SMF 422 transfers a policy create request to PCF 425 to create a policy association for UE 401. The request indicates the SUPI for UE 401.

PCF 425 receives the request and creates a policy association for UE 401. PCF 425 indicates the creation to SMF 422. PCF 425 transfers a binding information post request to BSF 429. The post request indicates the network address PCF 425 and SUPI for UE 401 (and potentially other subscriber IDs like GUTI and IP address). BSF 429 stores binding data that associates UE 401 and PCF 425. BSF 429 transfers a binding information post response to PCF 425 indicating the successful session binding. PCF 425 receives the response from BSF 429. PCF 425 sets a stale session timer to detect session stagnation for UE 401. For example, PCF 425 may set a session timer that lasts 24 hours, whereupon expiration of the timer before reception of an update message from SMF 424 causes PCF 425 to detect a stale session condition for UE 401. PCF 425 resets the stale session timer in response session update messages associated with UE 401 and received from SMF 422.

In response to creation of the policy association, SMF 422 transfers a policy update request to PCF 425 to retrieve session management policies from PCF 425. PCF 425 receives the request and selects session management policies for UE 401 that include data routing rules, UPF selection rules, resource allocation rules, QoS parameters, and/or other session management policies. For example, PCF 425 may interact with UDM 424 to select session management policies based on the network attributes included in UE 401 subscriber profile. PCF 425 generates and stores session data that characterizes the selected policies. PCF 425 transfers a policy update response that includes the session management policies to SMF 422.

SMF 422 receives the session management data from PCF 425. SMF 422 allocates a UE IP address for the requested PDU session, allocates a Tunnel End Point ID (TEID) for the session, and selects UPF 423 to support the PDU session. Upon selection of UPF 423, SMF 422 transfers a session modification request that includes a session endpoint identifier and TEID to UPF 423 to setup the default bearer for UE 401. The default bearer is a data link to carry data and data (e.g., voice/video conferencing data, IP messaging data, internet traffic, etc.) between UE 401 and data network 430. The default bearer traverses 5G RAN 411 and UPF 423. Upon reception of the request, UPF 423 receives and buffers downlink data for the PDU sessions of UE 401. UPF 423 transfers a session modification response to SMF 423 indicating the default bearer is ready begin the session. SMF 422 transfers a PDU session update response to AMF 421 to notify AMF 421 that the UE 401's PDU session is ready to begin.

SMF 422 selects CHF 427 to charge UE 401 for the session. SMF 422 transfers a charging request to CHF 427 that includes the SUPI for UE 401. CHF 427 selects a charging rate for the PDU session. For example, CHF 427 may interface with UDM 424 to determine the charging rate based on the network attributes stored in UE 401's subscriber profile. CHF 427 transfers a charging response to SMF 422 indicating CHF 427 is ready to charge for the PDU session. CHF 427 transfers a binding information post request to BSF 429. The post request indicates the network address CHF 425 and SUPI for UE 401 (and potentially other subscriber IDs like GUTI and IP address). BSF 429 stores binding data that associates UE 401 and CHF 427.

AMF 421 receives the PDU session update response from SMF 422. AMF 421 indicates the UE IP address and TEID for the session to UE 401 over RAN 411 and directs UE 401 to begin the PDU session. UE 401 begins the session based on the UE context, UE IP address, and TEID. UE 401 exchanges user data for the PDU session with UPF 423 over the default bearer the traverses RAN 411. UPF 423 exchanges the user data with data network 430. SMF 422 controls UPF 423 to enforce the network policies and rules received from PCF 425. SMF 422 monitors data volume of the PDU session and transfers usage reports to CHF 427. CHF 427 generates charges for UE 401 based on the usage reports and charging rate.

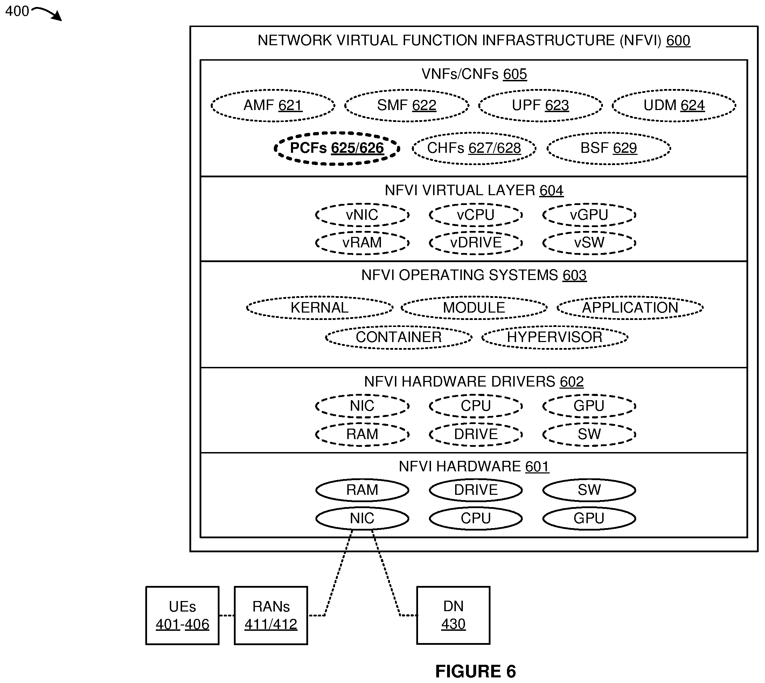

UEs 402-406 also attach to and register with network core 420 over RANs 411 and 412 as described above for UE 401. Upon successful registration, UEs 402-406 transfer PDU session requests to AMF 421. AMF 421 interfaces with SMF 422 to set up the PDU sessions for UEs 402-406 as described for UE 401. SMF 422 selects ones of PCF 425 and other PCFs 426 to retrieve session management policies for these sessions. SMF 422 selects ones of CHF 427 and other CHFs 428 to charge UEs 402-406 for their PDU sessions. PCFs 425/426 and CHFs 427/428 post binding information to BSF 429. BSF 429 stores binding data that associates UEs 402-406 with corresponding ones of PCFs 425/426 and CHFs 427/428. It should be appreciated that network 400 typically comprises many more UEs than illustrated in Figure 6. For example, the number of UEs registered and served by core 420 may range from the 1,000s to over 1,000,000. BSF 429 typically maintains a correspondingly large catalog of session bindings between UEs and PCFs and between UEs and CHFs. Given the large amount of data stored by BSF 429, BSF 429 risks overload conditions when stale binding data is not efficiently cleaned from BSF 429. As such, removing stale binding data from BSF 429 upon detecting session stagnation improves the operation of BSF 429 by inhibiting binding data overload therefore improving the overall user experience.

Returning back to the operation of UE 401, UE 401 decides to end its PDU session. UE 401 transfers a session termination request to AMF 421 over RAN 411. AMF 421 notifies SMF 422 of the session termination. SMF 422 transfers a PDU session release request to UPF 423 to tear down the default bearer for UE 401. UPF 423 stops exchanging user data for the PDU session with data network 430 and with UE 401 over RAN 411. SMF 421 notifies AMF 421 which directs RAN 411 to release UE 401.

An error occurs in SMF 422 causing SMF 422 to fail to transfer a session delete request to PCF 425 to notify PCF 425 of session termination for UE 401. Consequently, the stale session timer in PCF 425 expires before reception of the session delete request and PCF 425 detects a stale session condition for UE 401. To confirm the stale session condition, PCF 425 transfers an update notification for UE 401's session to SMF 422. The update notification indicates the SUPI for UE 401. Since the session is no longer active, SMF 422 returns a session not found message to PCF 425. The not found message triggers stale session cleanup on PCF 425. PCF 425 deletes the stale session data that it stores for UE 401 and transfers a delete binding data request to BSF 429. The request indicates the SUPI for UE 401. BSF 429 deletes binding data that associates PCF 425 and UE 401 based on the SUPI. BSF 429 also deletes binding data that associates CHF 427 and UE 401. BSF 429 transfers a delete binding data response to PCF 425 indicating the successful stale session cleanup on BSF 429. PCF 425 receives the response from BSF 429.

While PCF 425 is described above as directing BSF 429 to clear stale session bindings for both PCF 425 and CHF 427, in some examples, CHF 427 may direct BSF 429 to clear session binding data for itself. For example, CHF 427 may set a stale session timer, confirm session stagnation upon timer expiration, and direct BSF 429 to clear binding data between UE 401 and CHF 427 as described above for PCF 425.

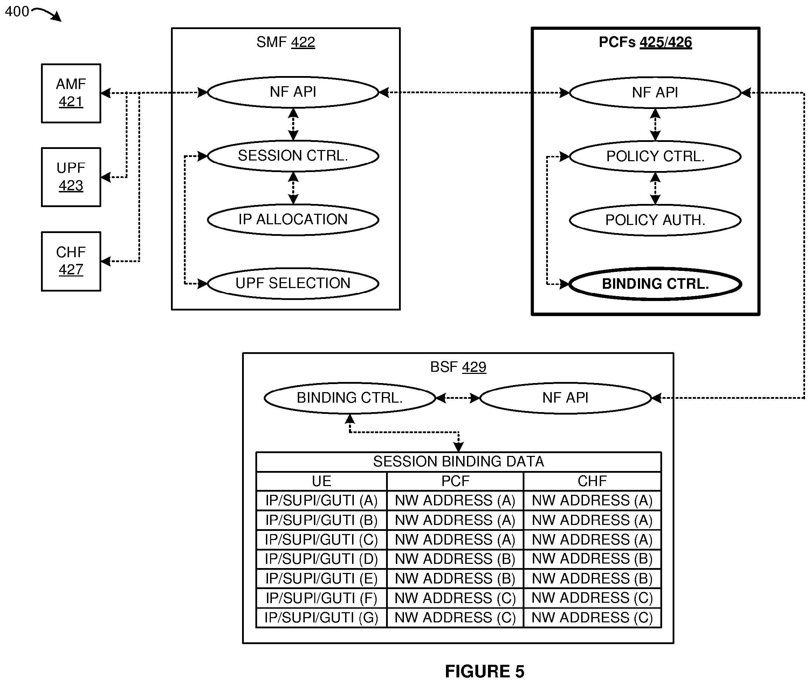

Figure 5 illustrates SMF 422, PCF 425, and BSF 429 in 5G communication network 400. In some examples, SMF 422 comprises modules for network function (NF) Application Programming Interface (API), session control, IP address allocation, and UPF selection. The session control module establishes PDU sessions over UPF 423, controls UPF 423 to enforce session management policies retrieved from PCF 425, and monitors data volume to generate usage reports for the PDU sessions. The IP allocation module allocates IP addresses and TEIDs for PDU sessions. The UPF selection module selects UPFs (e.g., UPF 423) for PDU sessions based on UPF selection data retrieved from UDM 424 and/or PCFs 425/426.

PCFs 425/426 comprise modules for network function API, policy control, policy authorization, and binding data control. The policy control module creates policy associations for UEs on network 400, provides selected policies to other network functions (e.g., AMF 421, SMF 422, etc.) in core 420, and generates session data characterizing the selected policies for the PDU sessions. The policy authorization model authorizes policy requests (e.g., by interfacing with UDM 424) made by the SMF 422. The binding control module creates session bindings on BSF 429, monitors for stale session conditions, deletes stale session data, and directs BSF to delete stale session bindings.

BSF 429 comprises modules for network function API and binding control and stores session binding data. The binding control module creates session bindings in response to session binding requests received from PCFs 425/426 and CHFs 427/428 and deletes stale session bindings in response to direction from PCFs 425/426 and in some examples, CHFs 427/428. The session binding data associates UEs by IP, SUPI, and/or GUTI with network addresses for PCFs and CHFs in network 400. The network functions APIs provide communication interfaces between SMF 422, PCFs 425/426, BSF 429, and the other network functions in core 420 (e.g., AMF 421, UPF 423, CHF 427, etc.).

Figure 6 illustrates Network Function Virtualization Infrastructure (NFVI) 600 in 5G wireless communication network 400. NFVI 600 comprises an example of core network 120 illustrated in Figure 1, although core network 120 may differ. NFVI 600 comprises NFVI hardware 601, NFVI hardware drivers 602, NFVI operating systems 603, NFVI virtual layer 604, and NFVI Virtual Network Functions (VNFs)/Cloud-Native Network Functions (CNFs) 605. NFVI hardware 601 comprises Network Interface Cards (NICs), CPU, GPU, RAM, Flash/Disk Drives (DRIVE), and Data Switches (SW). NFVI hardware drivers 602 comprise software that is resident in the NIC, CPU, GPU, RAM, DRIVE, and SW. NFVI operating systems 603 comprise kernels, modules, applications, containers, hypervisors, and the like. NFVI virtual layer 604 comprises vNIC, vCPU, vGPU, vRAM, vDRIVE, and vSW. NFVI VNFs/CNFs 605 comprise AMF 621, SMF 622, UPF 623, UDM 624, PCFs 625/626, CHFs 627/628, and BSF 629. Additional VNFs and network elements like AUSF, NSSF, UDR, NRF, SMSF, NEF, AF, EIR, and SCP are typically present but are omitted for clarity. NFVI 600 may be located at a single site or be distributed across multiple geographic locations. The NIC in NFVI hardware 601 is coupled to 5G RAN 411, 5G RAN 412, and data network (DN) 430. NFVI hardware 601 executes NFVI hardware drivers 602, NFVI operating systems 603, NFVI virtual layer 604, and NFVI VNFs/CNFs 605 to form AMF 421, SMF 422, UPF 423, UDM 424, PCFs 425/426, CHFs 427/428, and BSF 429.

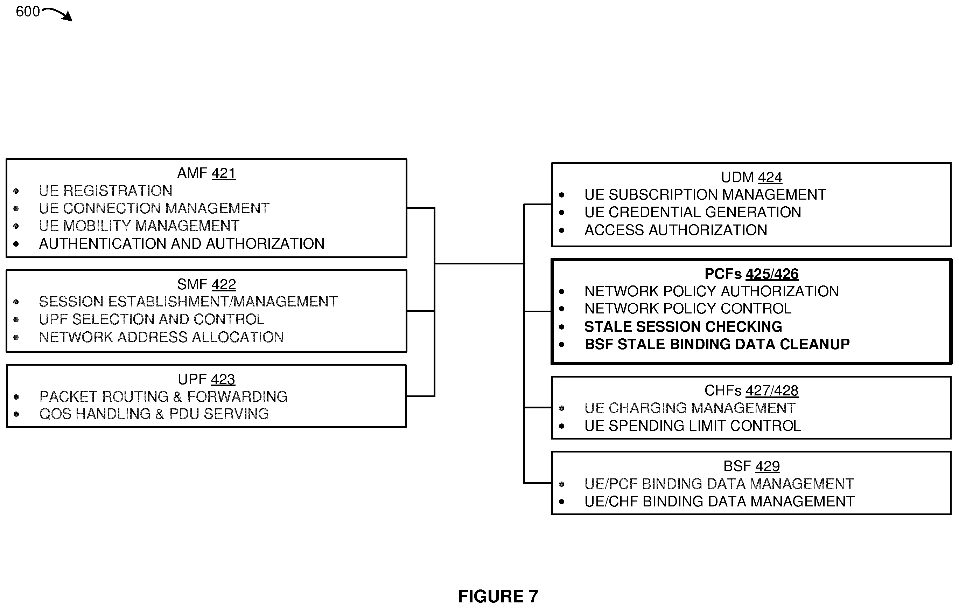

Figure 7 further illustrates NFVI 600 in 5G communication network 400. AMF 421 comprises capabilities for UE registration, UE connection management, UE mobility management, authentication, and authorization. SMF 422 comprises capabilities for session establishment, session management, UPF selection, UPF control, and network address allocation. UPF 423 comprises capabilities for packet routing, packet forwarding, QoS handling, and PDU serving. UDM 424 comprises capabilities for UE subscription management, UE credential generation, and UE access authorization. PCFs 425/426 comprise capabilities for network policy authorization, network policy control, stale session checking, and BSF stale binding data cleanup. CHFs 427/428 comprise capabilities for UE charging management and UE spending limit control. BSF 429 comprises capabilities for UE/PCF binding data management and UE/CHF binding data management.

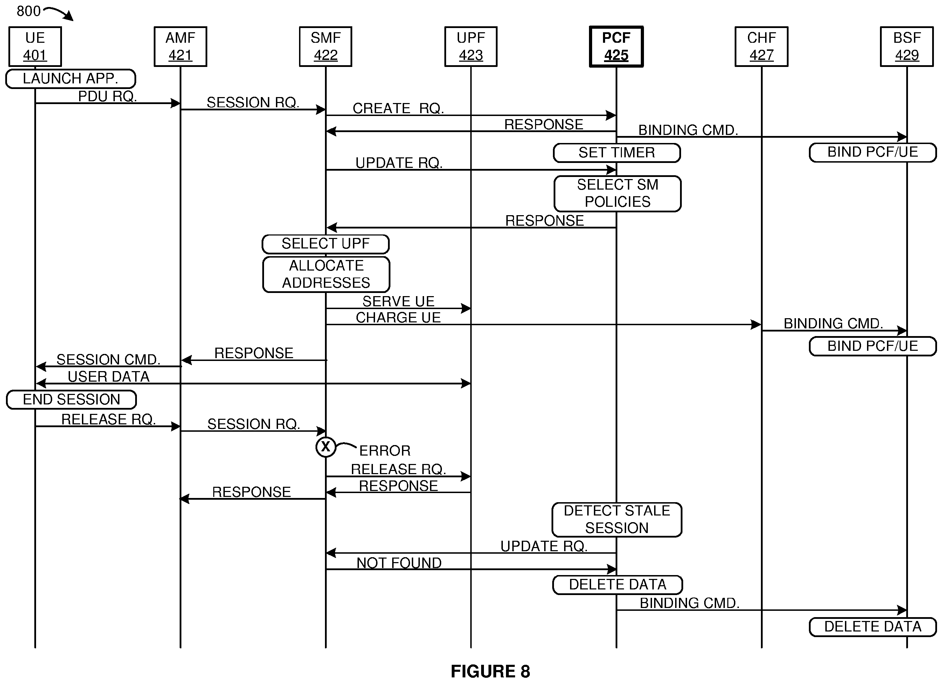

Figure 8 illustrates process 800. Process 800 comprises an exemplary operation of 5G communication network 400 to perform binding data cleanup in response to session stagnation for a wireless UE. Process 800 comprises an example of processes 200 and 300 illustrated in Figures 2 and 3, however processes 200 and 300 may differ. Process 800 may vary in other examples. In some examples, UE 401 launches a media streaming application (APP.) in response to a user input and wirelessly transfers a PDU session request to AMF 421 over RAN 411. AMF 421 selects SMF 422 to establish the media streaming PDU session for UE 401 based on SMF selection data received from UDM 424 during registration. AMF 421 transfers a PDU session update request to SMF 422 that identifies the media streaming PDU session and includes a PDU session activation command. In response to the request, SMF 422 transfers a policy create request that includes UE 401's SUPI to PCF 425 to create a policy association for UE 401.

PCF 425 creates a policy association for UE 401. PCF 425 indicates the creation to SMF 422. PCF 425 transfers a binding information request to BSF 429 that includes UE 401's SUPI. BSF 429 stores binding data that associates UE 401's SUPI and the network address of PCF 425. BSF 429 indicates the successful session binding to PCF 425. PCF 425 sets a stale session timer to detect session stagnation for UE 401. In response to creation of the policy association, SMF 422 transfers a policy update request to PCF 425 to retrieve session management policies from PCF 425. PCF 425 selects session management policies for UE 401. PCF 425 generates session data that characterizes the selected policies. PCF 425 transfers a policy update response that includes the session management policies to SMF 422.

SMF 422 allocates a UE IP address for the requested PDU session, allocates a TEID for the session, and selects UPF 423 to support the PDU session. SMF 422 transfers a session modification request that includes a session endpoint identifier and TEID to UPF 423. UPF 423 establishes a default bearer for the session. UPF 423 transfers a session modification response to SMF 423 indicating the default bearer is ready begin the session. SMF 422 transfers a charging request to CHF 427 that includes the SUPI for UE 401. CHF 427 selects a charging rate for the PDU session. CHF 427 transfers a charging response to SMF 422 indicating CHF 427 is ready to charge for the PDU session. CHF 427 transfers a binding information post request to BSF 429 that includes UE 401's SUPI. BSF 429 stores binding data that associates UE 401's SUPI and the network address of CHF 427. SMF 422 transfers a PDU session update response to AMF 421 to notify AMF 421 that UE 401's media streaming PDU session is ready to begin.

AMF 421 indicates the UE IP address and TEID for the session to UE 401 over RAN 411 and directs UE 401 to begin the PDU session. UE 401 begins the session based on the UE context, UE IP address, and TEID. UE 401 exchanges user data for the media streaming PDU session with UPF 423 over the default bearer the traverses RAN 411. UPF 423 exchanges the user data for the media streaming session with data network 430. SMF 422 controls UPF 423 to enforce the network policies and rules received from PCF 425. SMF 422 monitors data volume of the PDU session and transfers usage reports to CHF 427. CHF 427 generates charges for UE 401 based on the usage reports and charging rate.

UE 401 finishes its media streaming PDU session and transfers a session release request to AMF 421 over RAN 411. AMF 421 notifies SMF 422 of the session termination. An error occurs in SMF 422 causing SMF 422 to fail to transfer a session delete request to PCF 425. SMF 422 proceeds to transfer a PDU session release request to UPF 423 to tear down the default bearer for UE 401 without notifying PCF 425. UPF 423 stops exchanging user data for the media streaming PDU session with data network 430 and with UE 401 over RAN 411. SMF 421 notifies AMF 421 which directs RAN 411 to release UE 401.

The stale session timer in PCF 425 expires before reception of session delete request from SMF 422. PCF 425 detects a stale session condition for UE 401 based on the expiration of the timer. PCF 425 transfers an update notification for UE 401's session to SMF 422 to confirm the stale session condition. SMF 422 returns a session not found message to PCF 425 since UE 401 has since terminated its PDU session. PCF 425 triggers stale session cleanup and deletes the stale session data that it stores for UE 401. PCF 425 transfers a delete binding data request to BSF 429 to delete session bindings for UE 401's SUPI. BSF 429 deletes binding data that associates PCF 425 and UE 401. BSF 429 also deletes binding data that associates CHF 427 and UE 401.

The wireless data network circuitry described above comprises computer hardware and software that form special-purpose network circuitry to remove binding data for a wireless user device in response to session stagnation. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose network circuitry to remove binding data for a wireless user device in response to session stagnation.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents.

## Claims

1. A method comprising:
detecting, by a policy controller of a wireless communication network, a stale session condition for a wireless user device;
transferring, by the policy controller, a policy update request to a session controller for a session associated with the wireless user device;
receiving, by the policy controller, a message from the session controller that indicates the session associated with the wireless user device does not exist;
deleting, by the policy controller, session data for the wireless user device in response to the message;
directing, by the policy controller, a binding data store to delete session binding data associated with the wireless user device wherein the binding data store receives the direction from the policy controller and deletes the session binding data; and
receiving, by the policy controller, a delete indication from the binding data store that the session binding data is deleted.

2. The method of claim 1 wherein:
the wireless user device detaches from the wireless communication network and the session controller fails to notify the policy controller of session termination for the wireless user device; and
detecting, by the policy controller, the stale session condition for the wireless user device comprises detecting the stale session condition in response to not receiving a session delete request for the wireless user device from the session controller.

3. The method of claim 1 further comprising:
receiving, by the policy controller, a policy create request from the session controller for the wireless user device;
creating, by the policy controller, the session data for the wireless user device;
directing, by the policy controller, the binding data store to create the session binding data for the wireless user device wherein the binding data store receives the direction from the policy controller and creates the session binding data;
notifying, by the policy controller, the session controller that the session data associated with the wireless user device is created;
receiving, by the policy controller, a create indication from the binding data store that the session binding data is created; and
setting, by the policy controller, a stale session timer for the wireless user device.

4. The method of claim 3 wherein detecting, by the policy controller, the stale session condition for the wireless user device comprising detecting the stale session condition in response to expiration of the stale session timer before reception of a session delete request for the wireless user device from the session controller.

5. The method of claim 1 wherein:
the session binding data associates a network address for the policy controller with a user Identifier (ID) for the wireless user device; and
the user ID comprises one or more of a Subscriber Permanent Identifier (SUPI), a Generic Public Subscription Identifier (GPSI), and an Internet Protocol (IP) address for the wireless user device.

6. The method of claim 1 wherein the session data comprises network policies for the wireless user device.

7. The method of claim 1 further comprising:
executing, by Network Function Virtualized Infrastructure (NFVI) of the wireless communication network, the policy controller, session controller, and binding data store; and wherein:
the policy controller comprises a Fifth Generation Core (5GC) Policy Control Function (PCF);
the session controller comprises a 5GC Session Management Function (SMF); and
the binding data store comprises a 5GC Binding Support Function (BSF).

8. A wireless communication network comprising:
network circuitry configured to:
execute a policy controller, a session controller, and a binding data store;
the policy controller configured to:
detect a stale session condition for a wireless user device;
transfer a policy update request to the session controller for a session associated with the wireless user device;
receive a message from the session controller that indicates the session associated with the wireless user device does not exist;
delete session data for the wireless user device in response to the message;
direct the binding data store to delete session binding data associated with the wireless user device; and
receive a delete indication from the binding data store that the session binding data is deleted; and
the binding data store configured to:
receive the direction to delete the session binding data from the policy controller;
delete the session binding data; and
transfer the delete indication to the policy controller.

9. The wireless communication network of claim 8 wherein:
the wireless user device detaches from the wireless communication network and the session controller fails to notify the policy controller of session termination for the wireless user device; and
the policy controller is configured to detect the stale session condition in response to not receiving a session delete request for the wireless user device from the session controller.

10. The wireless communication network of claim 8 wherein:
the policy controller is further configured to:
receive a policy create request from the session controller for the wireless user device;
create the session data for the wireless user device;
direct the binding data store to create the session binding data for the wireless user device;
notify the session controller that the session data associated with the wireless user device is created;
receive a create indication from the binding data store that the session binding data is created; and
set a stale session timer for the wireless user device; and
the binding data store is further configured to:
receive the direction to create the session binding data from the policy controller;
create the session binding data; and
transfer the create indication to the policy controller.

11. The wireless communication network of claim 10 wherein the policy controller is configured to detect the stale session condition in response to expiration of the stale session timer before reception of a session delete request for the wireless user device from the session controller.

12. The wireless communication network of claim 8 wherein:
the session binding data associates a network address for the policy controller with a user Identifier (ID) for the wireless user device; and
the user ID comprises one or more of a Subscriber Permanent Identifier (SUPI), a Generic Public Subscription Identifier (GPSI), and an Internet Protocol (IP) address for the wireless user device.

13. The wireless communication network of claim 8 wherein the session data comprises network policies for the wireless user device.

14. The wireless communication network of claim 8 wherein:
the network circuitry comprises Network Function Virtualization Infrastructure (NFVI);
the policy controller comprises a Fifth Generation Core (5GC) Policy Control Function (PCF);
the session controller comprises a 5GC Session Management Function (SMF); and
the binding data store comprises a 5GC Binding Support Function (BSF).

15. One of more non-transitory computer readable storage media having program instructions stored thereon, wherein the program instruction, when executed by a computing system, direct the computing system to perform operations, the operations comprising:
detecting a stale session condition for a wireless user device of a wireless communication network;
transferring a policy update request to a session controller for a session associated with the wireless user device;
receiving a message from the session controller that indicates the session associated with the wireless user device does not exist; and
deleting session data for the wireless user device in response to the message.
